# EUROPEAN PATENT SPECIFICATION

(11) **EP 2 423 837 B1**
(45) Date of publication and mention of the grant of the patent: **08.05.2019**
(21) Application number: 11178784.2
(22) Date of filing: 25.08.2011
(51) Int. Cl.: G06F 16/957

(54) **Method and system for viewing web page and computer program product thereof**
Verfahren und System zum Anzeigen einer Website und Computerprogramm dafür
Procédé et système d'affichage de page Web et son produit de programme informatique

(30) Priority: 27.08.2010 TW 099128792
(43) Date of publication of application: 29.02.2012
(73) Proprietor: HTC Corporation, Taoyuan City 330 (TW)
(72) Inventor: Lin, Jen-Chiun, Taoyuan City Taoyuan County 330 (TW); Chang, Wen-Chi, Taoyuan City Taoyuan County 330 (TW); Lu, Kuang-Rong, Taoyuan City Taoyuan County 330 (TW); Li, Chung-Hung, Taoyuan City Taoyuan County 330 (TW)
(74) Representative: 2K Patentanwälte Blasberg Kewitz & Reichel

(56) References cited:
- EP-A1- 1 821 215
- EP-A1- 2 169 570
- US-A1- 2006 195 782
- US-A1- 2009 063 500
- US-A1- 2009 305 682
- Amol Kher: "The XML Diff and Patch GUI Tool", MSDN Microsoft, 1 July 2004 (2004-07-01), pages 1-7, XP55126686, Retrieved from the Internet: URL:http://msdn.microsoft.com/en-us/librar y/aa302295%28d=printer%29.aspx [retrieved on 2014-07-03]

## Description

### BACKGROUND OF THE INVENTION

### FIELD OF THE INVENTION

The disclosure generally relates to a method and a system for viewing a web page, and more particularly relates to a method and a system for automatically viewing a web page according to a URL (Uniform Resource Locator) and contents of the web page and according to a browsing setting.

### DESCRIPTION OF THE RELATED ART

Recently, mobile devices, handheld devices in particularly, have become highly advanced and have more functions. For example, handheld devices may have functions for telecommunications, Internet access, e-mail access, advanced management of a list of addresses, or playing multimedia applications, etc. Due to convenience, these mobile devices are essential in human lives.

Nowadays, users often link to the Internet and view web pages via electronic devices. Generally speaking, some web sites have web pages in a fixed format. For example, a news web site may have all kinds of classifications, such as classifications for general news or financial news. Examples of the types of web sites may be forums, message boards, blogs, social networks, or news sites, etc.

US 2006 / 0195782 A1 discloses a method for optimizing viewing pages by providing a table system which includes a classification system and a display system. The classification system trains a classifier to classify tables of display pages as a data table or not a data table based on certain features of the tables. The display system identifies the tables of a display page, identifies the features of the tables, and then uses the classifier to classify the tables based on their features. When a table is not classified as a data table, the display system may display the table in a conventional one-column view. When a table is classified as a data table, the display system displays the data table in an alternate view that attempts to preserve the layout and thus meaning of the data table.

The article "The XML Diff and Patch GUI Tool" of Amol Kher, MSDN Microsoft, 1. July 2004, on pages 1-7 (Docket No. XP55126686) describes how to use the XmlDiff class to compare two XML files and show these differences as an HTML document in a NET Framework 1.1 application. The article also shows how to build a WinForms application for comparing XML files.

US 2009 / 063500 A1 discloses systems and methods for extracting data content items from a web page. A template is created by labeling data content items of interest associated with a web page and generating a template Document Object Model (DOM) tree based on the labeled web page. DOM trees are also generated for additional web pages that contain data content items for which extraction may be desired. These DOM trees are compared to the template DOM tree to determine alignment there between. The aligned data content items may then be extracted from the additional web pages and indexed, as desired. Labeling the data content items of interest prior to generating a template DOM tree allows for the desired data content items to be specified and more accurately extracted from related and/or similarly structured web pages.

EP 1 821 21 A1 a parameter setting and storage method, wherein parameters necessary for browsing of content are stored in storage means while associating the parameters with location information of the content. When location information identical with location information of requested content has been stored in the storage means, parameters that have been stored in the storage means while being associated with the location information identical with the location information of the requested content are acquired from the storage means. When no location information identical with the location information of the requested content has been stored in the storage means, parameters that have been stored in the stora'ge means while being associated with location information satisfying a prescribed rule are acquired from the storage means if such location information satisfying the prescribed rule has been stored in the storage means.; The acquired parameters are applied to a process for the browsing of the requested content.

Due to limited screen sizes of mobile devices, when viewing different web pages on mobile devices, users often need to change a zoom ratio or text reflow so as to read data in an appropriate form. It is well known that users may need to adjust the mobile device repeatedly so as to sustain good viewing page experience, which is inconvenient for users. For example, if a user wants to zoom in to news text of a web page, the viewer may be required to zoom in again once a different news text is viewed so as to sustain good viewing page experience, which is inconvenient for the user and takes a long time.

### BRIEF SUMMARY OF THE INVENTION

In one exemplary embodiment, the disclosure is directed to a method for viewing web pages, for an electronic device, comprising the steps of: obtaining a web page; analyzing a specific classification of the web page according to a URL (Uniform Resource Locator) and contents of the web page; retrieving a browsing setting of the specific classification from a style-template database, wherein the style-template database records at least the browsing setting of each of a plurality of classifications; and viewing the web page according to the browsing setting.

In another exemplary embodiment, the disclosure is directed to a system for viewing web pages, for an electronic device, comprising: a storage unit, comprising a style-template database, wherein the style-template database records at least one browsing setting of each of a plurality of classifications; and a processor, obtaining a web page, analyzing a specific classification of the web page according to a URL (Uniform Resource Locator) and contents of the web page, retrieving the browsing setting of the specific classification from the style-template database, and viewing the web page according to the browsing setting.

### BRIEF DESCRIPTION OF DRAWINGS

The invention can be more fully understood by reading the subsequent detailed description and examples with references made to the accompanying drawings, wherein:
FIG. 1 is a diagram for illustrating a system for viewing web pages according to an embodiment of the invention;
FIG. 2 is a diagram for illustrating the style-template database according to an embodiment of the invention;
FIG. 3 is a flowchart for illustrating a method for viewing web pages according to an embodiment of the invention;
FIG. 4 is a flowchart for illustrating a method for determining the specific classification of the web page according to an embodiment of the invention;
FIG. 5 is a flowchart for illustrating a method for determining the specific classification of the web page according to an embodiment of the invention; and
FIG. 6 is a flowchart for illustrating a method for determining the specific classification of the web page according to an embodiment of the invention.

### DETAILED DESCRIPTION OF THE INVENTION

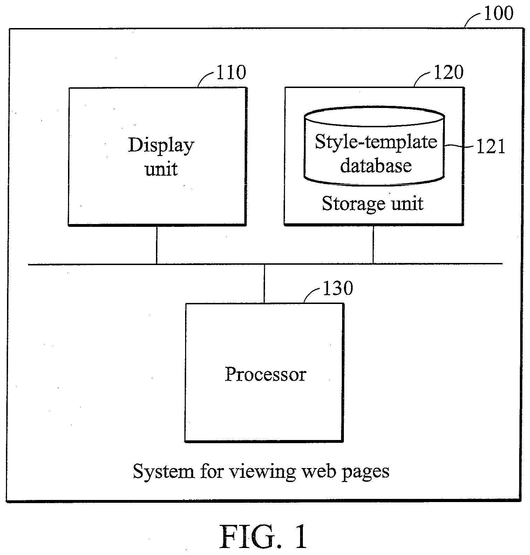

FIG. 1 is a diagram for illustrating a system 100 for viewing web pages according to an embodiment of the invention. The system 100 for viewing web pages may be applied to an electronic device, for example, a personal computer (PC), a personal digital assistance (PDA), a smart phone, a mobile phone, a mobile Internet device (MID), or a netbook.

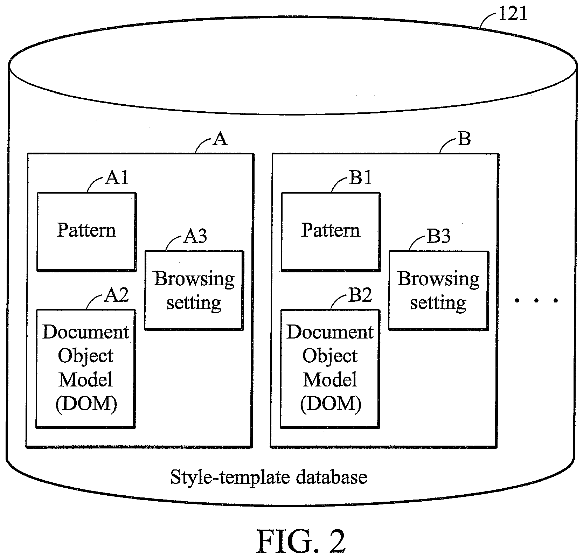

The system 100 comprises a display unit 110, a storage unit 120, and a processor 130. The display unit is configured to display web pages, data, and/or images and interfaces. The storage unit 120 comprises a style-template database 121. FIG. 2 is a diagram for illustrating the style-template database 121 according to an embodiment of the invention. As shown in FIG. 2, the style-template database 121 records a plurality of classifications, a pattern of each of the plurality of classifications, a DOM (Document Object Model), and a browsing setting. For example, the style-template database 121 in FIG. 2 records a pattern A1 of a classification A, a DOM A2, a browsing setting A3, a pattern B1 of a classification B, a DOM B2, and a browsing setting B3. It is noted that in some embodiments, the style-template database 121 merely records a browsing setting and either a pattern or a DOM. It is also noted that the DOM is an interface of a program in order to represent a document and establish communication between a web page and program codes. In some embodiments, the browsing settings A3, and B3 comprise a scrolling offset, a zoom level, a viewing block, whether to execute an application program (e.g., Flash or Script), and/or whether to reflow text. These settings will be illustrated in detail later. The storage unit 120 comprises data for display in the display unit 110. For example, the data may be a web page (not shown). It is noted that the system 100 may further comprise a network connection unit (not shown) for connecting to a network and reading/downloading a web page from a web site via the network. The processor 130 is configured to execute steps of a method for viewing web pages. All details will be illustrated as follows.

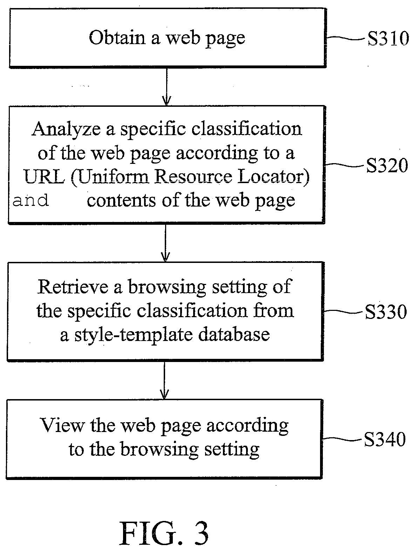

FIG. 3 is a flowchart for illustrating a method for viewing web pages according to an embodiment of the invention. The method for viewing web pages may be applied to an electronic device, for example, a personal computer (PC), a personal digital assistance (PDA), a smart phone, a mobile phone, a mobile Internet device (MID), or a netbook.

In step S310, a web page is obtained. It is noted that in some embodiments, the web page may be obtained from a web site via a network. In another embodiment, the web page may be stored in the storage unit 120 of the electronic device in advance, In step S320, a specific classification of the web page is analyzed according to a URL (Uniform Resource Locator) and contents of the web page (e.g., a DOM tree). It is noted that according to different demands and applications, the URL and the contents of the web page are utilized for analyzing the specification classification of the web page together. After the specific classification is obtained, in step S330, a browsing setting of the specific classification is retrieved from a style-template database. In step S340, the web page is viewed according to the browsing setting. It is noted that in some embodiments, the obtained browsing setting is utilized for setting a browser, which is utilized for viewing web pages. It is also noted that when a web page is viewed, the processor further makes a browsing adjustment of the web page and updates the browsing setting of the specific classification in the style-template database according to the browser adjustment. In another embodiment, if a user makes the browsing adjustment via the processor 130, the processor 130 may display a user interface through the display unit 110 so as to determine whether to update the browsing setting of the specific classification in the style-template database according to the browser adjustment. When the user confirms via the user interface, the browsing setting of the specific classification in the style-template database is updated according to the browser adjustment.

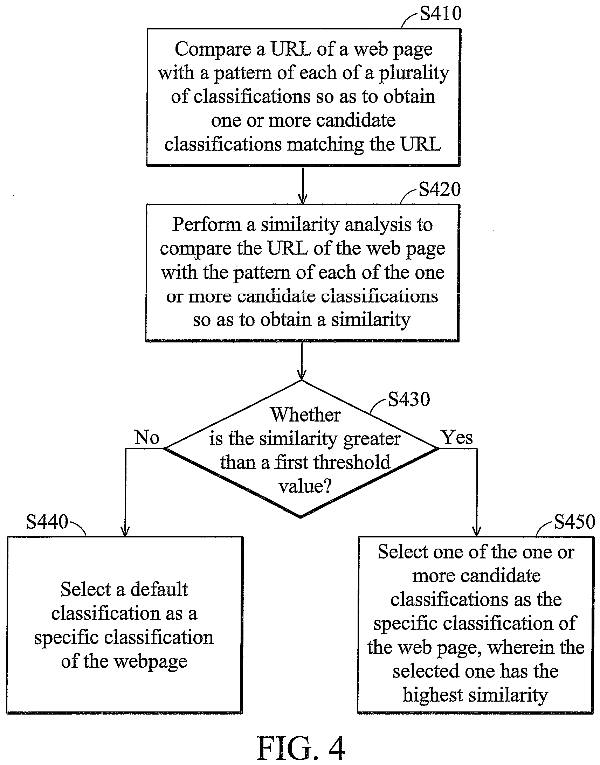

FIG. 4 is a flowchart for illustrating a method for determining the specific classification of the web page according to an embodiment of the invention. In the embodiment, the URL of the web page is utilized for analyzing the specific classification of the page.

In step S410, a URL of a web page is compared with a pattern of each of a plurality of classifications so as to obtain one or more candidate classifications matching the URL. In step S420, a similarity analysis is performed to compare the URL of the web page with the pattern of each of the one or more candidate classifications so as to obtain a similarity. It is noted that in some embodiments, the URL is compared with the pattern according to a regular expression. In other words, the pattern of each of the plurality of classifications may be set as a regular expression, and whether the URL of the web page matches the regular expression of each of the plurality of classification is determined. In another embodiment, the similarity analysis can be performed according to a common prefix portion and the other different portions. In step S430, whether the similarity between the URL and the pattern of each of the one or more candidate classifications is greater than a first threshold value is determined. If not, in step S440, a default classification is selected as a specific classification of the webpage. In other words, the web page is viewed according to a default browsing setting. If so, in step S450, one of the one or more candidate classifications is selected as the specific classification of the web page, wherein the selected one has the highest similarity. It is noted that if there is only one similarity between the URL and the pattern of only one of the one or more candidate classifications is greater than the first threshold value, the only one candidate classification is directly selected as the specific classification.

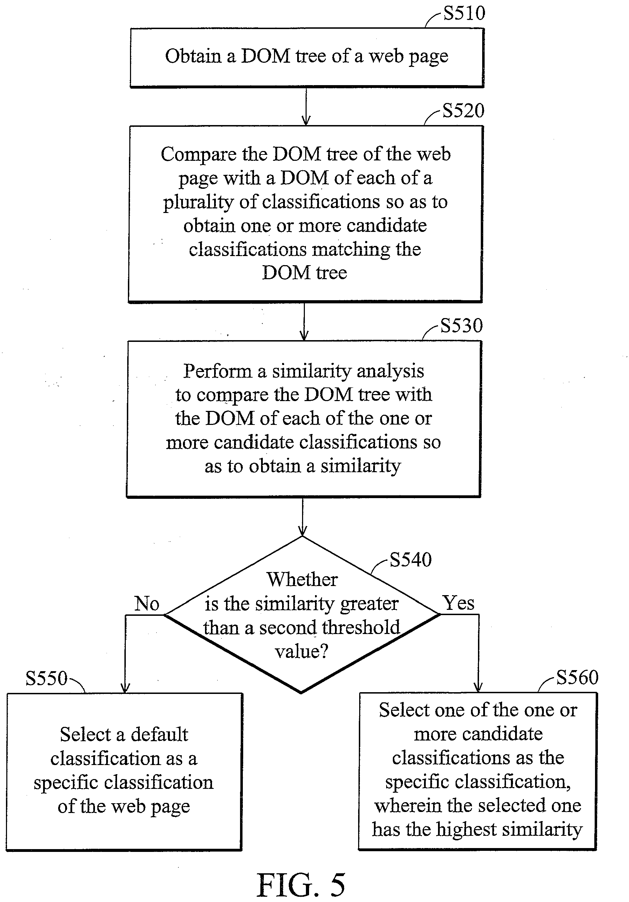

FIG. 5 is a flowchart for illustrating a method for determining the specific classification of the web page according to an embodiment of the invention. In the embodiment, the contents of the web page are utilized for analyzing the specific classification of the page.

In step S510, contents of a web page are obtained, such as a DOM tree. It is noted that the DOM tree is utilized for describing a structure of the web page. In some embodiments, the contents of the web page may be calculated so as to obtain the DOM tree. In another embodiment, the DOM tree of the web page may be obtained via a browser. In step S520, the DOM tree of the web page is compared with a DOM of each of a plurality of classifications so as to obtain one or more candidate classifications matching the DOM tree. It is noted that in some embodiments, the comparison between the DOM tree and the DOM may be made according to algorithms such as XML-Diff or HTML-Diff tools. In step S530, a similarity analysis is performed to compare the DOM tree with the DOM of each of the one or more candidate classifications so as to obtain a similarity. It is noted that in some embodiments, the foregoing similarity analysis may be performed according to a common sub-tree between the DOM tree and each DOM from a root node and according to a different left sub-tree between the DOM tree and each DOM. In step S540, whether the similarity is greater than a second threshold value is determined. If not, in step S550, a default classification is selected as a specific classification of the web page. In other words, the web page will be viewed according a default browsing setting. If so, in step S560, one of the one or more candidate classifications is selected as the specific classification, wherein the selected one has the highest similarity. If there is only one similarity between the DOM tree and the DOM of only one of the one or more candidate classifications is greater than the second threshold value, the only one candidate classification is directly selected as the specific classification.

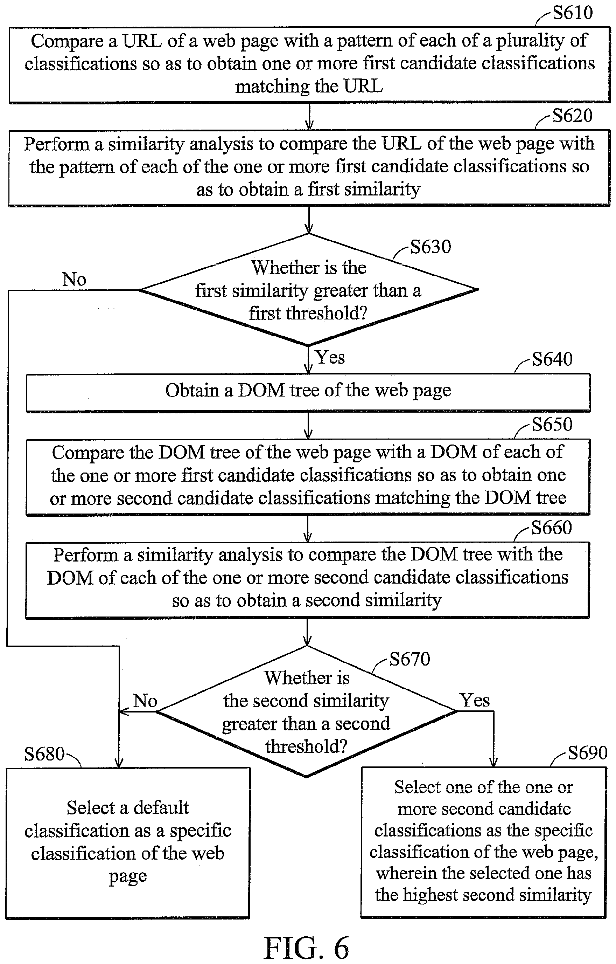

FIG. 6 is a flowchart for illustrating a method for determining the specific classification of the web page according to an embodiment of the invention. In the embodiment, the URL and contents of the web page are both utilized for analyzing the specific classification of the page at the same time.

In step S610, a web page is obtained and a URL of the web page is compared with a pattern of each of a plurality of classifications so as to obtain one or more first candidate classifications matching the URL. In step S620, a similarity analysis is performed to compare the URL of the web page with the pattern of each of the one or more first candidate classifications so as to obtain a first similarity. Similarly, in some embodiments, the URL is compared with the pattern according to a regular expression. In other words, the pattern of each of the plurality of classifications may be set as a regular expression, and whether the URL of the web page matches the regular expression of each of the plurality of classification is determined. In another embodiment, the similarity analysis can be performed according to a common prefix portion and the other different portions. In step S630, whether the first similarity is greater than a first threshold is determined. If not, in step S680, a default classification is selected as a specific classification of the web page. In other words, the web page is viewed according to a default browsing setting. If so, in step S640, a DOM tree of the web page is obtained. Similarly, the contents of the web page may be calculated so as to obtain the DOM tree. In another embodiment, the DOM tree of the web page may be obtained via a browser. In step S650, the DOM tree of the web page with a DOM of each of the one or more first candidate classifications is compared so as to obtain one or more second candidate classifications matching the DOM tree. Similarly, in some embodiments, the comparison between the DOM tree and the DOM may be made according to algorithms such as XML-Diff or HTML-Diff tools. In step S660, a similarity analysis is performed to compare the DOM tree with the DOM of each of the one or more second candidate classifications so as to obtain a second similarity. Similarly, in some embodiments, the foregoing similarity analysis may be performed according to a common sub-tree between the DOM tree and each DOM from a root node and according to a different left sub-tree between the DOM tree and each DOM. In step S670, whether the second similarity is greater than a second threshold value is determined. If not, in step S680, a default classification is selected as a specific classification of the web page. If so, in step S690, one of the one or more second candidate classifications is selected as the specific classification of the web page, wherein the selected one has the highest second similarity. Similarly, if there is only one second similarity between the DOM tree and the DOM of only one of the one or more second candidate classifications is greater than the second threshold value, the only one candidate classification is directly selected as the specific classification. It is noted that in some embodiments, if only one of the one or more first candidate classifications has the first similarity greater than the first threshold, the steps S640-S690 may be removed, and the only one first candidate classification is directly selected as the specific classification of the web page.

It is noted that the foregoing methods for determining whether the URL or the contents of the web page match the pattern or the DOM of each of the plurality of classifications are just examples of the invention. The invention is not limited to the examples. Furthermore, it is noted that the foregoing methods for calculating the similarity between the URL/contents of the web page and the pattern/DOM of each of the plurality of classifications are just examples of the invention. The invention is also not limited to the examples.

As a result, through the methods and systems of the invention for viewing web pages, a web page can be viewed according to a URL and contents of the web page and according to different browser settings, so a user does not need to perform operations repeatedly when viewing other similar web pages. This is more convenient and efficient, and reduces consumption of resources in a computer system.

Setting methods for display parameters, or certain aspects or portions thereof, may take the form of a program code (i.e., executable instructions) embodied in tangible media, such as floppy diskettes, CD-ROMS, hard drives, or any other machine-readable storage medium, wherein, when the program code is loaded into and executed by a machine, such as a computer, the machine thereby becomes an apparatus for practicing the methods. The methods may also be embodied in the form of a program code transmitted over some transmission medium, such as electrical wiring or cabling, through fiber optics, or via any other form of transmission, wherein, when the program code is received and loaded into and executed by a machine, such as a computer, the machine becomes an apparatus for practicing the disclosed methods. When implemented on a general-purpose processor, the program code combines with the processor to provide a unique apparatus that operates analogously to application specific logic circuits.

In summary a method for viewing web pages, applied to an electronic device is provided. The method comprises the steps of: obtaining a web page; analyzing a specific classification of the web page according to a URL (Uniform Resource Locator) or contents of the web page; retrieving a browsing setting of the specific classification from a style-template database, wherein the style-template database records at least the browsing setting of each of a plurality of classifications; and viewing the web page according to the browsing setting.

It will be apparent to those skilled in the art that various modifications and variations can be made in the invention. It is intended that the standard and examples be considered as exemplary only, with a true scope of the disclosed embodiments being indicated by the following claims and their equivalents.

## Claims

1. A method for viewing web pages, applied to an electronic device comprising a style-template database (121), wherein the style-template database (121) records a plurality of classifications, a pattern of each of the plurality of classifications, a DOM (Document Object Model) of each of the plurality of classifications, and at least one browsing setting of each of the plurality of classifications,
the method comprising the steps of:
(a) obtaining a web page (310);
(b) analyzing the web page to determine a specific classification of the web page according to a URL (Uniform Resource Locator) and contents of the web page; the step (b) comprises the steps of:
comparing the URL of the web page with the pattern of each of the plurality of classifications so as to obtain one or more first candidate classifications matching the URL; and
performing a similarity analysis to compare the URL of the web page with the pattern of each of the one or more first candidate classifications so as to obtain a first similarity; and
the step (b) further comprises the steps of:
obtaining a DOM tree of the web page;
comparing the DOM tree of the web page with the DOM tree of each of the plurality of first candidate classifications so as to obtain one or more second candidate classifications matching the DOM tree, wherein the each of the one or more first candidate classifications has the first similarity that is greater than a first threshold value; and
performing a similarity analysis to compare the DOM tree of the web page with the DOM of each of the one or more second candidate classifications so as to obtain a second similarity; and
selecting one of the one or more second candidate classifications as the specific classification, wherein the selected one has the highest second similarity;
(c) retrieving a browsing setting of the specific classification from the style-template database (121); and
(d) viewing the web page according to the browsing setting (340).

2. The method as claimed in claim 1, further comprising steps of, when the web page is displayed for viewing, making a browsing adjustment of the web page and updating the browsing setting of the specific classification in the style-template database according to the browser adjustment.

3. The method as claimed in claim 1 or 2, wherein the browsing setting comprising a scrolling offset, a zoom level, a viewing block, execution of an application program, and/or a reflow text.

4. A system for viewing web pages, the system comprising means adapted to perform anyone of the methods according to claims 1-3.

## Patentansprüche

1. Verfahren zum Betrachten von Webseiten, das auf eine elektronische Vorrichtung angewendet werden, die eine Style-Vorlagen-Datenbank (121) umfasst, wobei die Style-Vorlagen-Datenbank (121) eine Vielzahl von Klassifizierungen, ein Muster jeder der Vielzahl von Klassifizierungen, ein DOM (Document Object Model) jeder der Vielzahl von Klassifizierungen und mindestens eine Browsereinstellung jeder der Vielzahl von Klassifizierungen aufzeichnet,
wobei das Verfahren die Schritte umfasst:
(a) Erhalten einer Webseite (310);
(b) Analysieren der Webseite, um eine spezifische Klassifizierung der Webseite gemäß einer URL (Uniform Resource Locator) und dem Inhalt der Webseite zu bestimmen;
wobei der Schritt (b) die Schritte umfasst:
Vergleichen der URL der Webseite mit dem Muster jeder der Vielzahl von Klassifizierungen, um eine oder mehrere erste Kandidaten-Klassifikationen zu erhalten, die der URL entsprechen; und
Durchführen einer Ähnlichkeitsanalyse zum Vergleichen der URL der Webseite mit dem Muster jeder der einen oder mehreren ersten Kandidaten-Klassifikationen, um eine erste Ähnlichkeit zu erhalten; und
wobei der Schritt (b) ferner die Schritte umfasst:
Erhalten eines DOM-Baums der Webseite;
Vergleichen des DOM-Baums der Webseite mit dem DOM-Baum jeder der Vielzahl von ersten Kandidaten-Klassifikationen, um eine oder mehrere zweite Kandidaten-Klassifikationen zu erhalten, die dem DOM-Baum entsprechen, wobei jede der einen oder mehreren ersten Kandidaten-Klassifikationen die erste Ähnlichkeit aufweist, die größer als ein erster Schwellenwert ist; und
Durchführen einer Ähnlichkeitsanalyse zum Vergleichen des DOM-Baums der Webseite mit dem DOM jeder der einen oder mehreren zweiten Kandidaten-Klassifikationen, um eine zweite Ähnlichkeit zu erhalten; und
Auswählen einer der einen oder mehreren zweiten Kandidaten-Klassifikationen als die spezifische Klassifizierung, wobei die ausgewählte die höchste zweite Ähnlichkeit aufweist;
(c) Abrufen einer Browsereinstellung der spezifischen Klassifizierung aus der Style-Vorlagen-Datenbank (121); und
(d) Betrachten der Webseite gemäß der Browsereinstellung (340).

2. Verfahren nach Anspruch 1, ferner umfassend die Schritte, wenn die Webseite zum Betrachten angezeigt wird, eine Browsereinstellung der Webseite vorzunehmen und die Browsereinstellung der spezifischen Klassifizierung in der Style-Vorlagen-Datenbank gemäß der Browsereinstellung zu aktualisieren.

3. Verfahren nach Anspruch 1 oder 2, wobei die Browsereinstellung einen Scroll-Offset, eine Zoomstufe, einen Betrachtungsblock, die Ausführung eines Anwendungsprogramms und/oder einen Reflowtext umfasst.

4. System zum Betrachten von Webseiten, wobei das System Mittel umfasst, die angepasst sind, um jedes der Verfahren nach den Ansprüchen 1-3 auszuführen.

## Revendications

1. Un procédé de visualisation de pages Web, appliqué à un dispositif électronique, comprenant une base de données de modèles de style (121), dans lequel la base de données de modèles de style (121) enregistre une pluralité de classification, un motif de chacune des classifications au sein de la pluralité de classifications, un DOM (Modèle d'Objet de Document) de chacune des classifications au sein de la pluralité de classifications, et au moins une configuration de navigation pour chaque classification au sein de la pluralité de classifications,
le procédé comprenant les étapes consistant à :
(a) obtenir une page Web (310);
(b) analyser la page Web pour déterminer une classification spécifique de la page Web en fonction d'une URL (Uniform Resource Locator) ou du contenu de la page Web;
l'étape (b) comprenant les étapes consistant à :
comparer l'URL de la page web avec le motif de chaque classification au sein de la pluralité de classifications afin d'obtenir une ou plusieurs premières classifications candidate à une correspondance avec l'URL ; et
la mise en oeuvre d'une analyse de similitude pour comparer l'URL de la page web avec le motif de chacune parmi la ou les première classifications candidates afin d'obtenir une première similitude ; et
l'étape (b) comprenant en outre les étapes consistant à :
obtenir un arbre DOM de la page Web ;
comparer l'arbre DOM de la page Web avec l'arbre DOM de chaque classification au sein des premières classifications candidates afin d'obtenir une ou plusieurs seconde classifications candidates correspondant à l'arbre DOM, dans lequel chaque classification au sein de la ou des première classifications candidates a une première similitude qui est plus grande qu'une première valeur seuil ; et
effectuer une analyse de similitude pour comparer l'arbre DOM de la page web avec le DOM de chaque classification au sein de la ou des secondes classifications candidate afin d'obtenir une seconde similitude ; et
sélectionner une ou plusieurs secondes classifications candidates comme étant la classification spécifique, dans lequel la classification sélectionné a la seconde similitude la plus élevée ;
(c) retrouver une configuration de navigation de la classification spécifique à partir de la base de donnée de modèles de style (121) ; et
(d) visualiser la page web en fonction de la configuration de visualisation (340).

2. Le procédé tel que revendiqué dans la revendication 1, comprenant en outre, lorsque la page web est affichée pour être visualisée, les étapes consistant à effectuer un ajustement de navigation de la page web et la mise à jour de la configuration de navigation de la classification spécifique dans la base de données de modèles de style en fonction de l'ajustement de navigation.

3. Le procédé tel que revendiqué dans les revendications 1 ou 2, dans lequel la configuration de navigation comporte un décalage de défilement, un niveau d'agrandissement, un bloc de visualisation, l'exécution d'un programme d'application, et/ou un texte de ré-écoulement.

4. Un système de visualisation de pages web, le système comprenant des moyens pour exécuter l'un quelconque des procédés selon les revendications 1 à 3.
